# EUROPEAN PATENT APPLICATION

(11) **EP 4 246 773 A1**
(43) Date of publication of application: **20.09.2023**
(21) Application number: 22162661.7
(22) Date of filing: 17.03.2022
(51) Int. Cl.: H02K 1/18, H02K 15/00, H02K 1/14

(54) **STATORS FOR ELECTRICAL MACHINES**

(71) Applicant: GE Energy Power Conversion Technology Ltd, RUGBY, Warwickshire CV21 1BD (GB)
(72) Inventor: HAGUE, Michael, RUGBY, CV21 1BD (GB); PATEL, Vipulkumar, RUGBY, CV21 1BD (GB); ANBARASU, Ramasamy, RUGBY, CV21 1BU (GB)
(74) Representative: Serjeants LLP

(57) **Abstract**

A pre-fabricated and self-contained stator segment (2A) is described. The stator segment (2A) is adapted to be assembled with one or more other stator segments to a substantially cylindrical reinforcement member (20A) to form a segmented stator of an electrical machine. The stator segment (2A) has a plurality of spaced, longitudinally-extending winding slots formed in a first surface of the stator segment. A plurality of pre-formed stator coils are received in the winding slots and will form part of a single-layer stator winding of the electrical machine when the segmented stator is assembled. The stator segment (2A) includes a dovetail recess (8) in a second surface, opposite the first surface. The recess (8) is adapted to removably connect the stator segment (2A) to the substantially cylindrical reinforcement member (20A) by slidably receiving a corresponding dovetail protrusion (22) on the facing surface of the reinforcement member (20A). Other connecting elements can be used to removably connect the stator segment to the reinforcement member.

## Description

### DESCRIPTION

### Technical Field

The present invention relates to stators for rotating electrical machines, e.g., motors and generators, and in particular to stator segments that can be assembled together to define a segmented stator of the electrical machine.

### Background Art

Electrical machines that use permanent magnet rotors are well known. If there is a fault in one of the stator coils of the electrical machine, it can be difficult to affect a repair because of the limited access that is available, and the strong magnetic fields that are constantly generated by the permanent magnets. In fact, limited access between the stator and the rotor is often a problem for any type of electrical machine, i.e., both synchronous and asynchronous electrical machines.

A common method of forming single-layer stator windings in large rotating electrical machines is to insert a plurality of pre-formed stator coils into open-type winding slots formed in a surface of the stator. The coils are formed separately from the stator and then individually inserted into position in the winding slots. Each pre-formed stator coil is constructed from one or more conductors as a complete loop and has several turns. Each pre-formed stator coil normally has two axially-extending winding runs where each winding run is received within a respective winding slot. Each pre-formed stator coil has endwindings that protrude out from the axial end of the stator when the coil is positioned within the winding slots. The endwindings are normally physically accommodated by arranging them in a plurality of tiers. In electrical machines with a single-layer stator winding, each winding slot in the stator contains only one winding run and the two winding runs of each pre-formed stator coil are spaced so as to be received in winding slots that are separated by a number of intermediate winding slots. For example, a pre-formed stator coil for a three-phase single-layer winding might be received in winding slots that have two intermediate winding slots between them.

### Summary of the invention

The present invention provides a pre-fabricated stator segment adapted to be assembled with one or more other pre-fabricated stator segments to a substantially cylindrical reinforcement member to form a segmented stator of an electrical machine, the stator segment comprising:
a plurality of spaced, longitudinally-extending winding slots formed in a first, typically arcuate, surface of the stator segment;
a plurality of pre-formed stator coils, each stator coil received in a pair of the winding slots and forming part of a single-layer stator winding of the electrical machine; and
at least one connecting element adapted to removably connect the stator segment to the substantially cylindrical reinforcement member.

The stator segment is adapted to be removably connected to the reinforcement member of the stator so that the stator segment can be removed in the event of a fault in one of its stator coils, for example. It will be readily understood that by "removably connected" it is meant that the removable stator segment, and in particular the at least one connecting element, and the reinforcement member are deliberately configured in such a way that neither they, nor any other part of the segmented stator or the reinforcement member, is damaged during the removal process. This allows a replacement stator segment to be assembled to the reinforcement member after a faulty stator segment has been removed. The at least one connecting element is also preferably adapted to fix securely the stator segment to the reinforcement member at all other times, and in particular when the electrical machine is operating. In other words, after being assembled to the reinforcement member in an assembly process, the stator segment is preferably fixed securely to the reinforcement member by the at least one connecting element (or a fixing element) unless the stator segment needs to be removed. This preferably applies to all of the stator segments that are assembled to the reinforcement member.

A "substantially cylindrical" reinforcement member will include at least one substantially cylindrical surface. Such a substantially cylindrical surface may comprise a plurality of planar surfaces or flats, for example.

When the pre-fabricated stator segment is assembled with the one or more other stator segments to form the segmented stator, the first surface will form part of a radially inner or outer surface of the stator. In other words, the stator segments are preferably arranged circumferentially around the reinforcement member so that their respective first surfaces define a substantially cylindrical surface of the segmented stator in which a plurality of winding slots are formed. The reinforcement member is preferably formed as a hollow tubular member. If the segmented stator is designed to be located radially outside a rotor of the electrical machine, the first surfaces of the stator segments define a radially inner surface of the segmented stator that is spaced apart from a radially outer surface of the rotor by an air gap. Alternatively, if the segmented stator is designed to be located radially inside a rotor of the electrical machine, the first surfaces of the stator segments define a radially outer surface of the segmented stator that is spaced apart from a radially inner surface of the rotor by an air gap.

The pre-fabricated stator segment is designed to be a fully self-contained component that can be manufactured in a controlled environment (e.g., a factory or other manufacturing facility) and then transported to site for assembly with one or more other stator segments, typically of identical or substantially identical construction. The stator coils, end plates are therefore formed as an integral part of the stator segment prior to being assembled to the reinforcement member. The stator coils can be pre-formed using any known method, including a "resin rich" process where the individual stator coils are impregnated with a suitable resin and then inserted into the stator segment. Alternatively, during manufacture of the stator segment, the stator coils can be received in the winding slots with suitable slot insulation and the whole stator segment can be subjected to a vacuum pressure impregnation (VPI) process using a suitable resin.

The stator segment preferably has a laminated construction, i.e., it is formed from a stack of thin lamination sheets that are stamped or cut to have an outer profile that defines the winding slots and stator teeth. The lamination sheets are stacked together in the longitudinal direction, separated by electrically insulating layers, to form the body or core of the stator segment. In one arrangement, the thin sheets or laminations are electrically insulated from each other by a thin coating of insulating varnish or an oxide layer, for example. The laminated construction significantly reduces eddy current losses in the stator segment during operation of the electrical machine. The stacked laminations can be clamped between end plates of the stator segment - see below.

In one arrangement, the stator segment can comprise 2n winding slots and n stator coils, wherein n is any integer greater than or equal to two. Such an arrangement means that the pre-fabricated stator segment does not have any empty winding slots.

The number of stator coils and corresponding winding slots can be determined based on a minimum number for a particular stator design. For example, if the stator winding of the electrical machine is a two-phase single-layer stator winding, each stator segment can include four winding slots and two stator coils, or any multiple thereof, i.e., eight winding slots and four stator coils, twelve winding slots and six stator coils etc. If the stator winding of the electrical machine is a three-phase single-layer stator winding, each stator segment can include six winding slots and three stator coils, or any multiple thereof, i.e., twelve winding slots and six stator coils, eighteen winding slots and nine stator coils etc. The maximum number of winding slots will typically be determined by the physical size of the stator segment - i.e., there will normally be a limit to the physical size of the stator segment because it needs to be transported and handled during the assembly process, and consequently there will be a limit on the number of winding slots that can be physically accommodated in the first surface. Other factors may also be important, such as the mechanical and electrical properties of the stator teeth which are formed between the adjacent pairs of winding slots.

Each stator coil can include a pair of longitudinally-extending winding runs that are received in a pair of winding slots (or "winding slot pair"). The winding slots of each winding slot pair will normally be separated by one or more intermediate winding slots. For example, if the stator winding of the electrical machine is a two-phase single-layer stator winding, the winding slots of each winding slot pair will be separated by one intermediate winding slot. If the stator winding of the electrical machine is a three-phase single-layer stator winding, the winding slots of each winding slot pair will be separated by two intermediate winding slots.

The winding runs of each stator coil can be substantially parallel to each other in the longitudinal direction of the stator segment, where the longitudinal direction is parallel to the axial direction of the assembled segmented stator. The winding runs of each stator coil can also be substantially parallel to each other in the direction in which they extend into the stator segment and the winding slots of each corresponding winding slot pair can have central planes that are substantially parallel. The "central plane" of each winding slot is defined as the plane that is substantially equidistant from, and substantially parallel to, the sides of each winding slot. The central plane of each winding slot might normally be oriented along a radius of the stator so that the winding runs of the stator coil need to be angled relative to each other to fit into the winding slots. But if the central planes of the winding slots of each winding slot pair are substantially parallel to each other, the stator segment can be wound by simply inserting the parallel winding runs of each pre-formed stator coil into the parallel winding slots of the corresponding winding slot pair. This can significantly reduce winding time and the risk of damaging the stator coils, particularly those that are inherently stiff.

After the stator segments have been assembled to define the segmented stator of the electrical machine, the stator coils of the individual stator segments can be electrically connected to form the stator winding of the electrical machine.

The stator segment can further comprise a second surface, opposite the first surface. The second surface is typically arcuate, but can be planar. The second surface can include one or more curved and/or planar surfaces. If the first surface forms part of a radially inner surface of the segmented stator, the second surface will form part of a radially outer surface of the segmented stator, and *vice versa.* The individual stator segments are preferably arranged circumferentially around the reinforcement member so that their respective second surfaces define a substantially cylindrical surface of the segmented stator which faces a substantially cylindrical surface of the reinforcement member. If the second surface of each stator segment is planar, the substantially cylindrical surface of the segmented stator will comprise a plurality of planar surfaces or flats.

In one arrangement, each connecting element can comprise a shaped protrusion formed on the second surface of the stator segment and adapted to be received in a complementary shaped recess formed in the facing substantially cylindrical surface of the reinforcement member, or a shaped recess formed in the second surface of the stator segment and adapted to receive a complementary shaped protrusion formed on the facing substantially cylindrical surface of the reinforcement member. For example, a longitudinally-extending shaped protrusion can be formed on the second surface of the stator segment which is adapted to be received in an axially-extending complementary shaped recesses in the substantially cylindrical surface of the reinforcement member, or an axially-extending shaped protrusion can be formed on the substantially cylindrical surface of the reinforcement member which is adapted to be received in a longitudinally-extending complementary shaped recess in the second surface of the stator segment. Each protrusion and its corresponding recess can have any suitable profile, e.g., dovetail, T-shaped etc. designed to permit the stator segment to move axially relative to the reinforcement member during an assembly or removal process with the protrusion received in its corresponding recess, but to restrict movement of the stator segment away from the reinforcement member in the radial direction. Each protrusion does not need to extend along the full longitudinal or axial length of the stator segment or reinforcement member. Each protrusion can be formed by a plurality of protrusions that are aligned so as to be received in the same recess, but which are spaced apart in the longitudinal or axial direction. Each protrusion can be integrally formed with the stator segment or reinforcement member, or formed as a separate component that is fixedly secured to the stator segment or reinforcement member, for example using mechanical fixings. In one arrangement, the protrusion may be defined by a separate support bar with a dovetail or T-shaped cross-section profile that is fixedly secured to the substantially cylindrical surface of the reinforcement member. The support bar can be fixedly secured by any suitable means such as by welding or by a plurality of axially-spaced mechanical fixings such as bolts or screws, for example. The mechanical fixings can be inserted into longitudinally-spaced threaded openings in the support bar and aligned openings in the reinforcement member. If a plurality of shaped protrusions or recesses are provided in each stator segment, they are preferably circumferentially spaced apart along the second surface of the stator segment and corresponding recesses or protrusions are circumferentially spaced along the substantially cylindrical surface of the reinforcement member. The plurality of shaped protrusions can have the same profile or different profiles, and the plurality of shaped recesses can have the same profile or different profiles. The stator segment can include one or more shaped protrusions and one or more shaped recesses, and the reinforcement member can include one or more shaped protrusions and one or more shaped recesses - i.e., the stator segment and the reinforcement member can have a combination of different connecting elements such as protrusions and recesses with the same profile or with different profiles.

The winding slots preferably do not extend into a structural part of the stator segment which is adjacent the second surface. If the stator segment includes one or more shaped recesses, each shaped recess can extend into the structural part of the stator segment and care must be taken that the mechanical and electrical properties of the stator segment are not compromised. If the stator segment includes one or more shaped protrusions, each shaped protrusion can be formed as an extension of the structural part of the stator segment. The profile of each shaped protrusion or shaped recess can be defined by the outer profile of each lamination sheet and each longitudinally-extending shaped protrusion or shaped recess is formed when the plurality of lamination sheets are stacked together to form the stator segment.

A gap or clearance can be provided between each shaped protrusion and its corresponding shaped recess to facilitate assembly and removal of the stator segment to and from the reinforcement member. Each shaped protrusion and its corresponding shaped recess (and any other facing parts of the stator segment and the reinforcement member) can include one or more contact surfaces, i.e., surfaces that are intended to be in direct physical contact when the stator segment is properly assembled to the reinforcement member. There can be at least two contact surfaces. The contact surfaces can be circumferentially spaced apart and are designed to provide stable mounting surfaces for the stator segment, and in particular to help prevent movement of the stator segment relative to the reinforcement member during operation of the electrical machine. Each shaped protrusion and its corresponding shaped recess (and any other facing parts of the stator segment and the reinforcement member) can also include one or more spaced surfaces, i.e., surfaces that are intended to be spaced apart from each other when the stator segment is properly assembled to the reinforcement member. The at least one connecting element can further comprise one or more wedges or similar mechanical fixings, which are inserted between the spaced surfaces to fix securely the stator segment to the reinforcement member. Any suitable wedges or mechanical fixings can be used, e.g., back-to-back taper wedges. The wedges or mechanical fixings must be capable of being removed or released to allow the stator segment to be removed from the reinforcement member if necessary, for example to allow a replacement stator segment to be assembled to the reinforcement member in its place. Such wedges or mechanical fixings can be considered to be fixing elements for fixing the stator segment relative to the reinforcement member.

To assemble the segmented stator, each stator segment is moved axially relative to the reinforcement member with the or each shaped protrusion received in its corresponding shaped recess. Once each stator segment is properly assembled to the reinforcement member, i.e., it is axially located, the stator segment is preferably fixed securely to the reinforcement member by inserting one or more wedges or by using other mechanical fixings. The stator segments are assembled and fixed to the reinforcement member in turn until the segmented stator is complete. The segmented stator can include any suitable number of stator segments depending on the stator design. Once the segmented stator is assembled, the stator coils of the stator segments can be connected together to form the stator winding of the electrical machine.

If there is a fault with one of the stator coils of a particular stator segment, or some other issue that requires maintenance or repair outside the electrical machine, the faulty stator segment can be released from the reinforcement member, e.g., by removing the one or more wedges or other mechanical fixings, and then removed from the segmented stator by moving it axially relative to the reinforcement member with the or each shaped protrusion received in its corresponding shaped recess. A replacement stator segment can then be assembled to the segmented stator in its place. The faulty stator segment can be repaired on-site or transported to a factory or other repair facility. Before removing a particular stator segment, its stator coils will be disconnected from the rest of the stator winding.

In another arrangement, each connecting element can comprise a connecting bar (or "build bar") that extends through a longitudinally-extending passage in the stator segment, e.g., in the structural part of the stator segment. The connecting bar can comprise one or more threaded openings longitudinally spaced along the connecting bar. Each threaded opening is preferably aligned with a corresponding opening in the second surface of the stator segment and a corresponding opening in the reinforcement member. The opening in the reinforcement member can be threaded or non-threaded. Each stator segment can comprise one or more longitudinally-spaced openings in the second surface and the reinforcement member can comprise one or more axially-spaced openings in a substantially cylindrical surface of the reinforcement member. The aligned openings are adapted to allow a mechanical fixing such as a bolt or screw, for example, to be inserted through the reinforcement member and through part of the stator segment before being screwed into the threaded opening in the connecting bar. The mechanical fixings securely fix the stator segment to the reinforcement member and prevent relative movement of the stator segment in both the axial and radial directions. If the reinforcement member is formed as a hollow tubular member, the one or more openings in the reinforcement member can extend completely through the reinforcement member.

The stator segment can comprise two or more connecting bars, each connecting bar extending through a corresponding longitudinally-extending passage in the stator segment. It will be readily understood that the reinforcement member will include a plurality of axially-spaced openings for receiving a plurality of mechanical fixings to removably connect each stator segment to the reinforcement member. If each stator segment includes two or more connecting bars, the reinforcement member will include corresponding axially-spaced openings for receiving mechanical fixings for each of the connecting bars. The reinforcement member will therefore comprise a multiple of such axially-spaced openings which are circumferentially-spaced around the reinforcement member.

The stator segment can include one or more longitudinally-extending passages, each passage being adapted to receive a tie rod. Each stator segment can include a pair of end plates. The end plates can be shaped such that they do not interfere with the endwindings of the stator coils. A plurality of tie rods can be connected between the axial end plates to apply a clamping load to the stacked laminations of the stator segment. If the stator segment includes one or more connecting bars, they can be retained between the end plates. More particularly, the end plates can contact the axial ends of each connecting bar so that they are retained and cannot move in the axial direction. Instead of using tie rods, the stacked laminations of the assembled stator segment can be compressed, and the axial end plates can be welded to the ends of the connecting bar.

Each longitudinally-extending passage in the stator segment for receiving a connecting bar or tie rod can be defined by a respective opening in each lamination sheet so that the passage is formed when the lamination sheets are stacked together to form the stator segment. The connecting bar and the corresponding passage can have any suitable cross-section, e.g., circular, square etc., the cross-section of the passage being defined by the cross-section of the respective opening in each lamination sheet.

Each alignment opening in the second surface of the stator segment can have any suitable cross-section, e.g., square, and can be defined by the outer profile of certain lamination sheets. In particular, certain lamination sheets can have a notch in the edge that defines the second surface of the stator segment when the laminations are stacked together. A plurality of these lamination sheets can then be stacked between stacks of lamination sheets that do not include a notch to define an opening in the second surface of the stator segment. Each aligned opening in the second surface of the stator segment only needs to be sized and shaped to provide access to the respective threaded opening in the connecting bar.

A mechanical fixing, e.g., a bolt or screw, can be passed through the aligned openings in the reinforcement member and the structural part of the stator segment and screwed into the threaded opening in the connecting bar. A plurality of mechanical fixings can be used to removably connect the stator segment to the connecting bar with the head of each mechanical fixing being tightened against the reinforcement member.

To facilitate the alignment between the one or more openings in the reinforcement member and the corresponding one or more openings in the second surface of the stator segment, the stator segment can comprise at least one alignment element (or guide element). In one arrangement, each alignment element can comprise a shaped protrusion formed on the second surface of the stator segment and adapted to be received in a complementary shaped recess formed in the substantially cylindrical surface of the reinforcement member, or a shaped recess formed in the second surface of the stator segment and adapted to receive a complementary shaped protrusion formed on the substantially cylindrical surface of the reinforcement member. For example, a longitudinally-extending shaped protrusion can be formed on the second surface of the stator segment which is adapted to be received in an axially-extending complementary shaped recesses in the substantially cylindrical surface of the reinforcement member, or an axially-extending shaped protrusion can be formed on the substantially cylindrical surface of the reinforcement member which is adapted to be received in a longitudinally-extending complementary shaped recess in the second surface of the stator segment. The alignment element can be defined by a suitable profile on the second surface of the stator segment and a complementary profile on the facing substantially cylindrical surface of the reinforcement member which ensures proper alignment. It will be understood that the one or more alignment elements are not intended to secure the stator segment to the reinforcement member, but are for guiding the stator segment and assisting with the proper positioning of the stator segment relative to the reinforcement member during the assembly and removal processes. One or more alignment elements (or guide elements) can be used in any type of stator segment, not just a stator segment that is designed to be removably connected to the reinforcement member using a connecting bar.

The connecting bar and longitudinal-extending passageway in the stator segment can also include at least one alignment element (or guide element) or have a suitable cross-section so that the threaded openings in the connecting bar are properly aligned with the corresponding openings in the stator segment.

To assemble the segmented stator using one or more connecting bars, each stator segment is moved axially relative to the reinforcement member, optionally while being guided by the one or more alignment elements. Once each stator segment is properly assembled to the reinforcement member, i.e., it is axially located, the stator segment is fixed securely to the reinforcement member by inserting one or more mechanical fixings through the reinforcement member, through part of the stator segment, and into the one or more threaded openings in the or each connecting bar. If the stator segment is positioned radially inside the reinforcement member, the one or more mechanical fixings can be inserted from radially outside the reinforcement member. If the stator segment is positioned radially outside the reinforcement member, the one or more mechanical fixings can be inserted from radially inside the reinforcement member, which is preferably a hollow tubular member. If there is a fault with one of the stator coils of the stator segment, the stator segment can be released from the reinforcement member, e.g., by untightening and removing the mechanical fixings, and then removed from the segmented stator by moving the stator segment axially relative to the reinforcement member. A replacement stator segment can then be assembled to the segmented stator. The removed stator segment can be repaired on-site or transported to a factory or other repair facility.

The present invention further provides a segmented stator of an electrical machine comprising:
a substantially cylindrical reinforcement member; and
a plurality of stator segments, each stator segment comprising:
   a plurality of spaced, longitudinally-extending winding slots formed in a first surface of the stator segment;
   a plurality of pre-formed stator coils, each stator coil received in a pair of the winding slots; and
   at least one connecting element;
wherein each stator segment is removably connected to the reinforcement member by the at least one connecting element; and
wherein the stator coils of the plurality of stator segments are electrically connected to form a single-layer stator winding of the electrical machine.

The reinforcement member can be solid or have a laminated construction, i.e., it can be formed from a stack of thin lamination sheets that are stacked together in the axial direction to form the reinforcement member. The laminated construction significantly reduces eddy current losses in the reinforcement member. Compared with a conventional stator, the need for the stator segments to be connected to a reinforcement member will introduce additional mass, but may also provide additional stiffness which can be beneficial.

The reinforcement member is preferably a hollow tubular member.

The reinforcement member can be part of, or mechanically connected to, a stator frame.

Circumferentially-adjacent stator segments can be in abutment or spaced apart by a small gap.

The segmented stator can comprise any suitable number of pre-fabricated stator segments. The number will depend on the total number of winding slots of the segmented stator and the number of winding slots formed in each stator segment. Preferably the stator segments are of identical or substantially identical construction.

The present invention further provides an electrical machine (e.g., a motor or generator) comprising a segmented stator as described above, and a rotor. The rotor can include a of plurality of permanent magnets arranged circumferentially around the radially outer or radially inner surface of the rotor to define a plurality of rotor poles of alternating polarity. But in practice the electrical machine can be of any suitable type, i.e., a synchronous or asynchronous electrical machine, with an appropriate rotor design.

The segmented stator is particularly suitable for use in physically large rotating electrical machines that have a large diameter.

In one arrangement, the rotor can be part of a gearless mill drive motor, which motors normally have a large diameter. In a gearless mill drive motor, the mill drum is an integral part of the rotor body.

The present invention further provides a method of assembling a segmented stator of an electrical machine, comprising:
providing a plurality of stator segments, each stator segment comprising:
   a plurality of spaced, longitudinally-extending winding slots formed in a first surface of the stator segment;
   a plurality of pre-formed stator coils, each stator coil received in a pair of the winding slots; and
   at least one connecting element;
providing a substantially cylindrical reinforcement member;
moving each stator segment axially relative to the reinforcement member and removably connecting each stator segment to the reinforcement member using the at least one connecting element.

The method can further comprise electrically connecting the stator coils of the plurality of stator segments to form a single-layer stator winding of the electrical machine.

The present invention further provides a method of repairing or servicing a segmented stator of an electrical machine, the segmented stator comprising:
a substantially cylindrical reinforcement member; and
a plurality of stator segments, each stator segment comprising:
   a plurality of spaced, longitudinally-extending winding slots formed in a first surface of the stator segment;
   a plurality of pre-formed stator coils, each stator coil received in a pair of the winding slots; and
   at least one connecting element;
wherein each stator segment is removably connected to the reinforcement member by the at least one connecting element;
the method comprising:
   removing a stator segment, e.g., with a faulty stator coil, by moving the stator segment axially relative to the reinforcement member.

### Drawings

Figure 1 is an end view of a stator segment according to the present invention with a dovetail recess;
Figure 2 is a side view of the stator segment shown in Figure 1;
Figure 3 is an end view of the stator segment shown in Figure 1 including the stator coils;
Figures 4 and 5 show an end view of part of a segmented stator according to the present invention comprising a plurality of stator segments shown in Figure 1;
Figure 6 is an end view of an alternative stator segment according to the present invention with a dovetail recess;
Figure 7 is an end view of a stator segment according to the present invention with a dovetail protrusion;
Figure 8 is an end view of part of a segmented stator according to the present invention comprising a plurality of stator segments shown in Figure 7;
Figure 9 is an end view of an alternative segmented stator according to the present invention comprising a plurality of stator segments shown in Figure 7;
Figure 10 is an end view of an alternative stator segment according to the present invention with a T-shaped protrusion;
Figure 11 is an end view of part of an alternative segmented stator according to the present invention comprising a plurality of stator segments shown in Figure 10;
Figure 12 is an end view of an alternative stator segment according to the present invention with a connecting bar;
Figure 13 is a side view of the alternative stator segment shown in Figure 12;
Figure 14 is a top view of part of the alternative stator segment shown in Figure 12;
Figure 15 is an end view of a segmented stator according to the present invention comprising a plurality of stator segments shown in Figure 12;
Figure 16 is a top view of part of the segmented stator shown in Figure 15; and
Figure 17 is an end view of part of an alternative segmented stator according to the present invention comprising a plurality of stator segments with a connecting bar and an alignment element.

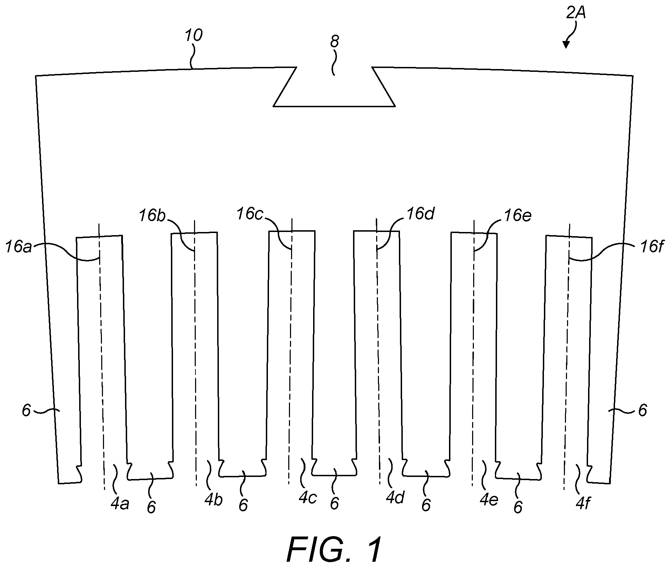

Figures 1 to 3 show a single stator segment 2A according to the present invention. As described in more detail below, a plurality of such stator segments are assembled together to a substantially cylindrical reinforcement member to form a segmented stator of an electrical machine, e.g., a motor or generator.

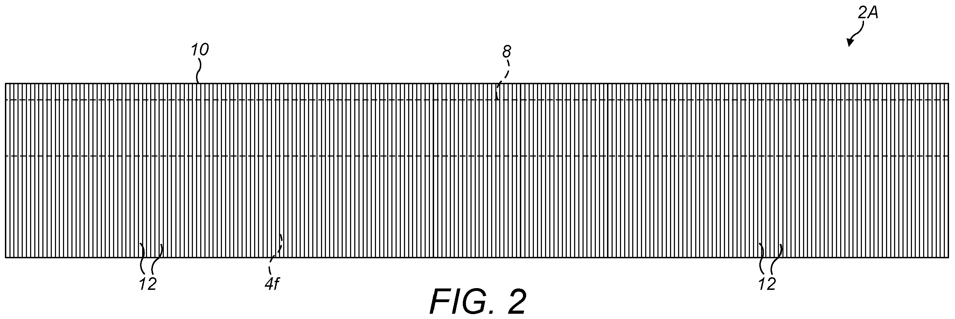

The stator segment 2A includes six spaced open-type winding slots 4a, 4b, ..., 4f formed in a first arcuate surface. The winding slots 4a, 4b, ..., 4f extend along the longitudinal axis of the stator segment as shown in Figure 2. When assembled to form a segmented stator, the longitudinal axis of each stator segment 2A will be parallel with the longitudinal axis of the segmented stator and more generally of the electrical machine. Each winding slot 4a, 4b, ..., 4f is defined between a pair of stator teeth 6. A connecting element in the form of a recess 8 having a dovetail profile is formed in a second arcuate surface 10 of the stator segment 2A and extends along the longitudinal axis of the stator segment as shown in Figure 2.

The stator segment 2A is formed of a stack of thin sheets or laminations 12 that are stamped or cut to have an outer profile that defines the winding slots, the stator teeth and the recess. The lamination sheets 12 are stacked together in the longitudinal direction. The laminated construction significantly reduces eddy current losses in the stator segment 2A.

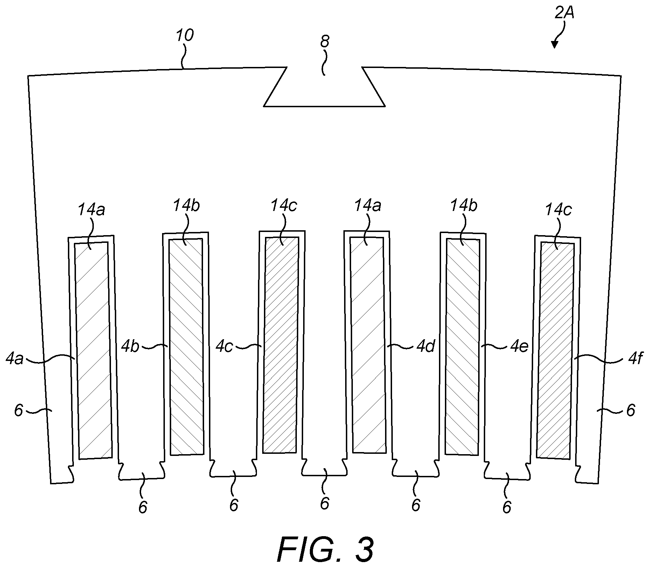

Each stator segment 2A includes a plurality of pre-formed stator coils. In Figures 1 and 2, the stator coils have been omitted for clarity. As shown in Figure 3, three stator coils 14a, 14b and 14c are received in the winding slots 4a, 4b, ..., 4f of each stator segment 2A and form part of a three-phase single-layer stator winding of the electrical machine. More particularly, a first stator coil 14a has a pair of longitudinally-extending winding runs that are received in a first pair of winding slots 4a and 4d (or first "winding slot pair"), a second stator coil 14b has a pair of longitudinally-extending winding runs that are received in a second pair of winding slots 4b and 4e (or second winding slot pair), and a third stator coil 14c has a pair of longitudinally-extending winding runs that are received in a third pair of winding slots 4c and 4f (or third winding slot pair). The winding slots of each winding slot pair are separated by two intermediate winding slots as shown in Figure 3. For example, the winding slots 4a and 4d that receive the winding runs of the first stator coil 14a are separated by winding slots 4b and 4c, the winding slots 4b and 4e that receive the winding runs of the second stator coil 14b are separated by winding slots 4c and 4d, and the winding slots 4c and 4f that receive the winding runs of the third stator coil 14c are separated by winding slots 4d and 4e. The stator coils 14a, 14b and 14c are retained in the open-type winding slots 4a, 4b, ..., 4f by slot wedges (not shown).

The winding runs of each stator coil 14a, 14b and 14c are substantially parallel to each other in the longitudinal direction of the stator segment 2A. The winding runs of each stator coil 14a, 14b and 14c are also substantially parallel to each other in the direction in which they extend into the stator segment 2A, and the winding slots of each corresponding winding slot pair have central planes that are substantially parallel. This is shown in Figure 1 where the central plane 16a, 16b, ..., 16f of each winding slot 4a, 4b, ..., 4f is indicated by the dashed line and is defined as the plane that is substantially equidistant from, and substantially parallel to, the sides of each winding slot. More particularly, it can be seen that the central planes 16a and 16d of the winding slots 4a and 4d that receive the first stator coil 14a are substantially parallel, that the central planes 16b and 16e of the winding slots 4b and 4e that receive the second stator coil 14b are substantially parallel, and that the central planes 16c and 16f of the winding slots 4c and 4f that receive the third stator coil 14c are substantially parallel. Such an arrangement allows the pre-fabricated stator segment 2A to be wound by simply inserting the parallel winding runs of each pre-formed stator coil 14a, 14b and 14c into the parallel winding slots of the corresponding winding slot pair.

The stator coils 14a, 14b and 14c are formed separately in a known manner and then individually inserted into position in the winding slots 4a, 4b, ..., 4f during manufacture of the stator segment. Each pre-formed stator coil 14a, 14b and 14c is constructed from one or more conductors as a complete loop and has several turns. Although not shown, each pre-formed stator coil 14a, 14b and 14c has endwindings that protrude out from the axial ends of the stator segment 2A when the stator coil is positioned within the winding slots 4a, 4b, ..., 4f. The endwindings are physically accommodated by arranging them in a plurality of tiers in a known manner.

The stator segments 2A are designed to be self-contained components that can be manufactured in a controlled environment (e.g., a factory or other manufacturing facility) and then transported to site for assembly. The stator coils 14a, 14b and 14c are therefore formed as an integral part of each stator segment prior to being assembled to a reinforcement member. During manufacture of each stator segment 2A, the stator coils 14a, 14b and 14c can be received in the winding slots 4a, 4b, ..., 4f with suitable slot insulation and the whole stator segment can be subjected to a vacuum pressure impregnation (VPI) process using a suitable resin. Alternatively, the stator coils 14a, 14b and 14c can be pre-formed using a resin rich process and then inserted into the winding slots 4a, 4b, ..., 4f.

After the stator segments have been assembled to define the segmented stator, the stator coils of the individual stator segments can be electrically connected to define the stator winding of the electrical machine.

Each stator segment 2A is adapted to be removably connected to a reinforcement member so that it can be removed in the event of a fault in one of its stator coils, for example. It will therefore be readily understood that, in the event of a fault in one of the stator coils 14a, 14b and 14c, the whole of the stator segment 2A can be removed from the segmented stator of a permanent magnet electrical machine, for example, thereby avoiding the problem of trying to remove the faulty stator coil with limited access and in the presence of the strong magnetic fields generated by the permanent magnets on the rotor.

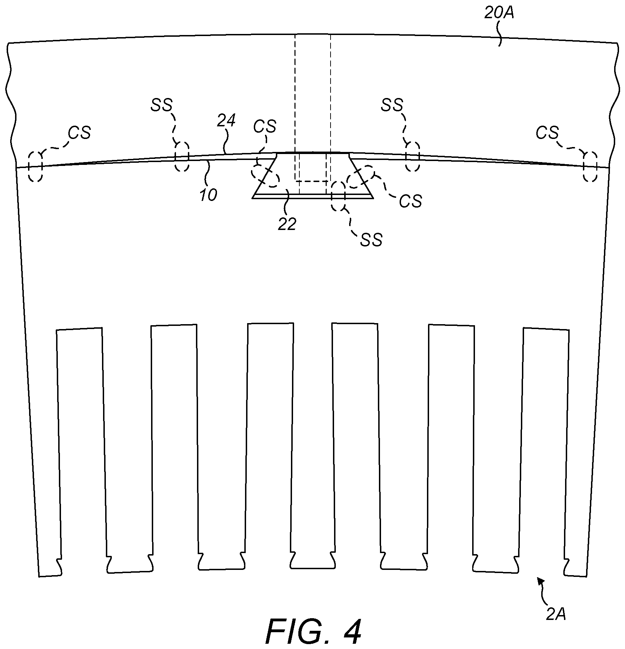

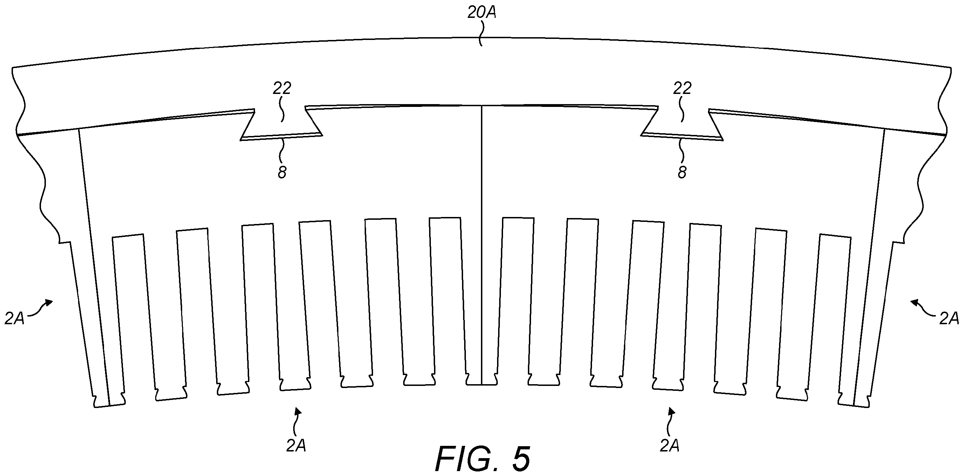

Figures 4 and 5 show part of a segmented stator according to the present invention. More particularly, Figure 4 shows a single stator segment 2A that is removably connected to a hollow tubular reinforcement member 20A. Only part of the reinforcement member 20A is shown. Figure 5 shows four stator segments 2A, but it will be readily understood that several more stator segments will be connected to the reinforcement member 20A to form the complete segmented stator.

The reinforcement member 20A includes a plurality of circumferentially-spaced and axially-extending protrusions 22 on its substantially cylindrical radially inner surface 24. As shown in Figure 4, each protrusion 22 is formed as a support bar with a dovetail cross-section profile that is fixedly secured to the reinforcement member 20A. More particularly, each support bar 22 is fixedly secured to the reinforcement member 20A by a plurality of axially-spaced mechanical fixings such as bolts or screws that are inserted into a plurality of longitudinally-spaced threaded openings in the support bar and aligned opening in the reinforcement member 20A. In Figure 4 the openings are indicated by the dashed lines. The mechanical fixings are inserted from radially outside the reinforcement member 20A. In the following description, it is assumed that the secured support bars are an integral part of the reinforcement member 20A and that each support bar defines a protrusion 22 for removably connecting a respective stator segment 2A.

If the segmented stator is formed from *n* stator segments, the reinforcement member 20A will include a total of *n* protrusions. But it will be readily understood that if each stator segment includes two or more recesses in its second arcuate surface, the reinforcement member 20A will include a total of *p* × *n* protrusions, where *p* is the number of recesses formed in each stator segment.

Each protrusion 22 has a complementary dovetail profile and is adapted to be received in the recess 8 of a stator segment 2A. In this way, the stator segments 2A are removably connected to the reinforcement member 20A, i.e., by receiving a protrusion 22 in the recess 8 of each stator segment and sliding the stator segment axially relative to the reinforcement member until it is properly positioned. Once properly positioned, each stator segment 2A is fixedly secured to the reinforcement member 20A until it needs to be removed. For example, each stator segment 2A is fixed to the reinforcement member 20A during normal operation of the electrical machine using wedges or similar mechanical fixings which are described in more detail below. A stator segment 2A can be removed from the segmented stator for repair or maintenance by releasing the wedge or mechanical fixing and then sliding the stator segment axially relative to the reinforcement member 20A until the protrusion 22 is no longer received in the recess 8.

The reinforcement member 20A is fixedly connected to an external stator frame (not shown).

As shown in Figure 5, the stator segments 2A are arranged circumferentially around the reinforcement member 20A so that their respective first arcuate surfaces define a substantially cylindrical radially inner surface of the segmented stator in which a plurality of winding slots are formed. The second arcuate surfaces 10 will form part of a substantially cylindrical radially outer surface of the segmented stator facing the radially inner surface 24 of the reinforcement member 20A. The segmented stator is positioned radially outside a rotor (not shown) of the electrical machine with the first arcuate surfaces of the stator segments 2A separated from a radially outer surface of the rotor by an air gap.

Figure 4 shows how a gap or clearance is provided between the recess 8 and its corresponding shaped protrusion 22 to facilitate assembly and removal of the stator segment 2A to and from the reinforcement member 20A. The stator segment 2A and the reinforcement member 20A include contact surfaces, i.e., facing surfaces that are intended to be in direct physical contact when the stator segment is properly assembled to the reinforcement member. In Figure 4, the various contact surfaces are labelled as "CS". Peripheral portions of the second arcuate surface 10 of the stator segment 2A are in direct physical contact with peripheral portions of the facing inner surface 24 of the reinforcement member 20A and there is also direct physical contact between the angled surfaces of the protrusion 22 and the angled surfaces of the recess 8. The stator segment 2A and the reinforcement member 20A also include one or more spaced surfaces, i.e., facing surfaces that are spaced apart from each other when the stator segment is properly assembled to the reinforcement member. In Figure 4, the various spaced surfaces are labelled as "SS".

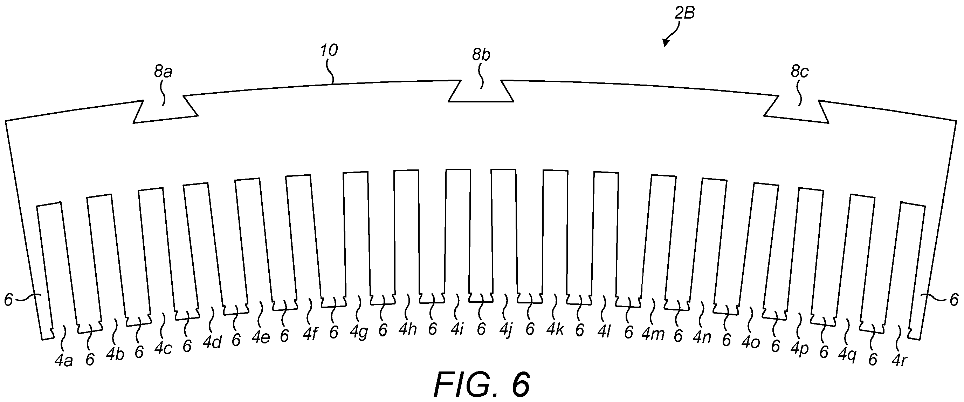

The number of stator coils and winding slots in each stator segment can be determined based on a minimum number for a particular design. The stator segment 2A shown in Figures 1 to 3 has six winding slots 4a, 4b, ..., 4f and three stator coils 14a, 14b and 14c. The alternative stator segment 2B shown in Figure 6 has eighteen winding slots 4a, 4b, ..., 4r for receiving nine stator coils. The alternative stator segment has three recesses 8a, 8b and 8c in the second arcuate surface 10.

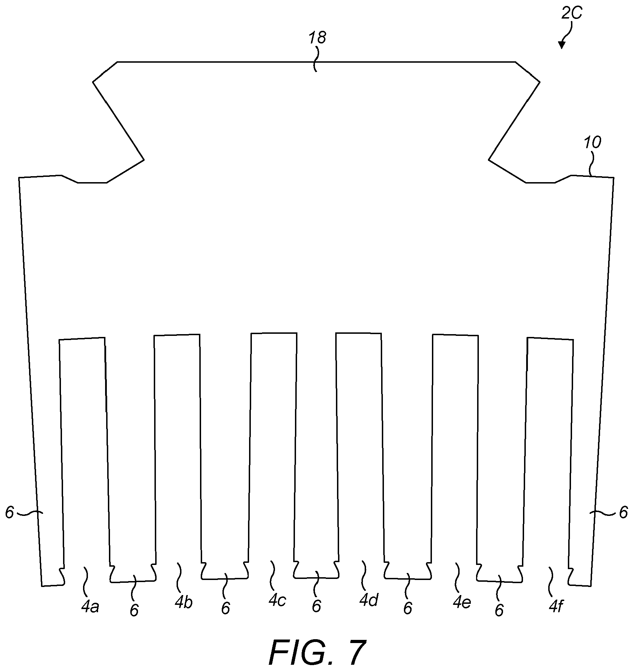

Figure 7 shows an alternative stator segment 2C. The stator segment 2C includes six spaced winding slots 4a, 4b, ..., 4f formed in a first arcuate surface. The winding slots 4a, 4b, ..., 4f extend along the longitudinal axis of the stator segment. Each winding slot 4a, 4b, ..., 4f is defined between a pair of stator teeth 6. A connecting element in the form of a protrusion 18 having a dovetail profile is formed in a second arcuate surface 10 of the stator segment 2C and extends along the longitudinal axis of the stator segment. In all other respects, the stator segment 2C is the same as stator segments 2A and 2B described above.

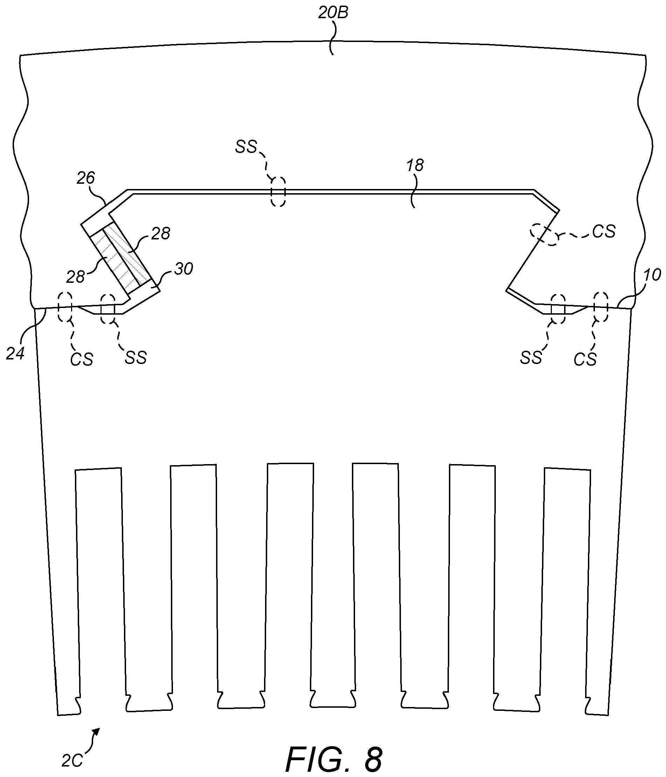

Figure 8 shows the stator segment 2C removably connected to a hollow tubular reinforcement member 20B. Only part of the reinforcement member 20B is shown. It will be readily understood that several more stator segments will be connected to the reinforcement member 20B to form the complete segmented stator.

The reinforcement member 20B includes a plurality of circumferentially-spaced and axially-extending recesses 26 in its substantially cylindrical radially inner surface 24. Each recess 26 has a complementary dovetail profile and is adapted to receive the protrusion 18 of a stator segment 2C. In this way, the stator segments 2C are removably connected to the reinforcement member 20B, i.e., by receiving the protrusion 18 of each stator segment in a recess 26 and sliding the stator segment axially relative to the reinforcement member until it is properly positioned. Once properly positioned, each stator segment 2C is fixedly secured to the reinforcement member 20B until it needs to be removed. For example, each stator segment 2C is fixed to the reinforcement 20B during normal operation of the electrical machine using wedges or similar mechanical fixings which are described in more detail below. A stator segment 2C can be removed from the segmented stator for repair or maintenance by releasing the wedge or mechanical fixing and then sliding the stator segment axially relative to the reinforcement member 20B until the protrusion 18 is no longer received in the recess 26.

Figure 8 shows how a gap or clearance is provided between the protrusion 18 and its corresponding shaped recess 26 to facilitate assembly and removal of the stator segment 2C to and from the reinforcement member 20B. The stator segment 2C and the reinforcement member 20B include contact surfaces, i.e., facing surfaces that are intended to be in direct physical contact when the stator segment is properly assembled to the reinforcement member. In Figure 8, the various contact surfaces are labelled as "CS". Peripheral portions of the second arcuate surface 10 of the stator segment 2C are in direct physical contact with peripheral portions of the facing inner surface 24 of the reinforcement member 20B and there is also direct physical contact between the angled surfaces of the protrusion 18 and the angled surfaces of the recess 26. The stator segment 2C and the reinforcement member 20B also include one or more spaced surfaces, i.e., facing surfaces that are spaced apart from each other when the stator segment is properly assembled to the reinforcement member. In Figure 8, the various spaced surfaces are labelled as "SS". Back-to-back taper wedges 28 are shown inserted in the gap 30 between a pair of spaced surfaces from an axial end of the segmented stator. The taper wedges 28 are inserted between the spaced surfaces as shown to fix securely the stator segment 2C to the reinforcement member 20B. The taper wedges 28 are capable of being removed or released to allow the stator segment 2C to be removed from the reinforcement member 20B if necessary.

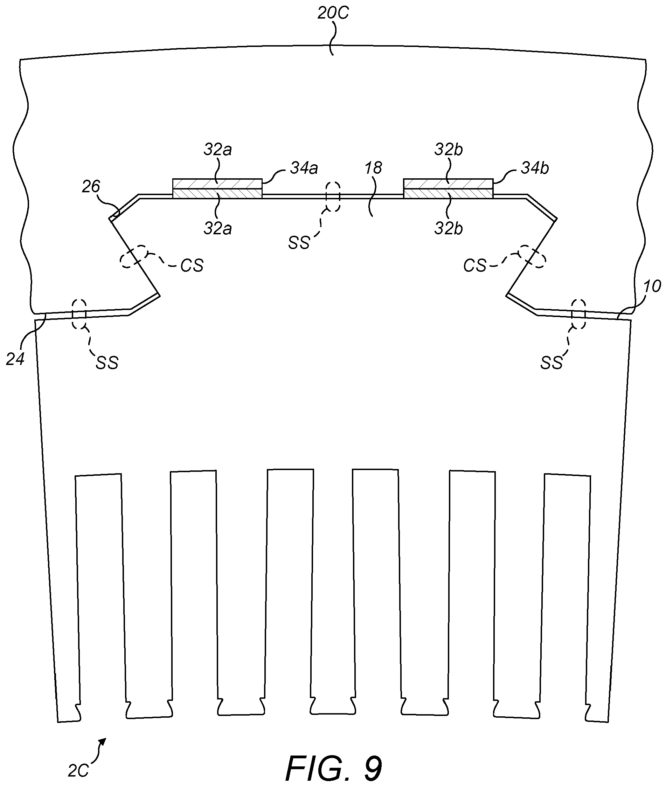

Figure 9 shows a stator segment 2C with the same dovetail-shaped protrusion 18 removably connected to a hollow tubular reinforcement member 20C. Only part of the reinforcement member 20C is shown. It will be readily understood that several more stator segments will be connected to the reinforcement member 20C to form the complete segmented stator.

The reinforcement member 20C includes a plurality of circumferentially-spaced and axially-extending recesses 26 in its substantially cylindrical radially inner surface 24. Each recess 26 has a complementary dovetail profile and is adapted to receive the protrusion 18 of a stator segment 2C. In this way, the stator segments 2C are removably connected to the reinforcement member 20C, i.e., by receiving the protrusion 18 of each stator segment in a recess 26 and sliding the stator segment axially relative to the reinforcement member until it is properly positioned. Once properly positioned, each stator segment 2C is fixedly secured to the reinforcement member 20C until it needs to be removed. For example, each stator segment 2C is fixed to the reinforcement member 20C during normal operation of the electrical machine using wedges or similar mechanical fixings which are described in more detail below. A stator segment 2C can be removed from the segmented stator for repair or maintenance by releasing the wedge or mechanical fixing and then sliding the stator segment axially relative to the reinforcement member 20C until the protrusion 18 is no longer received in the recess 26.

Figure 9 shows how a gap or clearance is provided between the protrusion 18 and its corresponding shaped recess 26 to facilitate assembly and removal of the stator segment 2C to and from the reinforcement member 20C. The stator segment 2C and the reinforcement member 20C include contact surfaces, i.e., facing surfaces that are intended to be in direct physical contact when the stator segment is properly assembled to the reinforcement member. In Figure 9, the various contact surfaces are labelled as "CS". There is direct physical contact between the angled surfaces of the protrusion 18 and the angled surfaces of the recess 26. The stator segment 2C and the reinforcement member 20C also include one or more spaced surfaces, i.e., facing surfaces that are spaced apart when the stator segment is properly assembled to the reinforcement member. In Figure 9, the various spaced surfaces are labelled as "SS". A pair of back-to-back taper wedges 32a, 32b are shown inserted in corresponding gaps 34a, 34b between a pair of spaced surfaces. The taper wedges 32a, 32b are inserted between the spaced surfaces from an axial end of the segmented stator to fix securely the stator segment 2C to the reinforcement member 20C. The taper wedges 32a, 32b are capable of being removed or released to allow the stator segment 2C to be removed from the reinforcement member 20C if necessary.

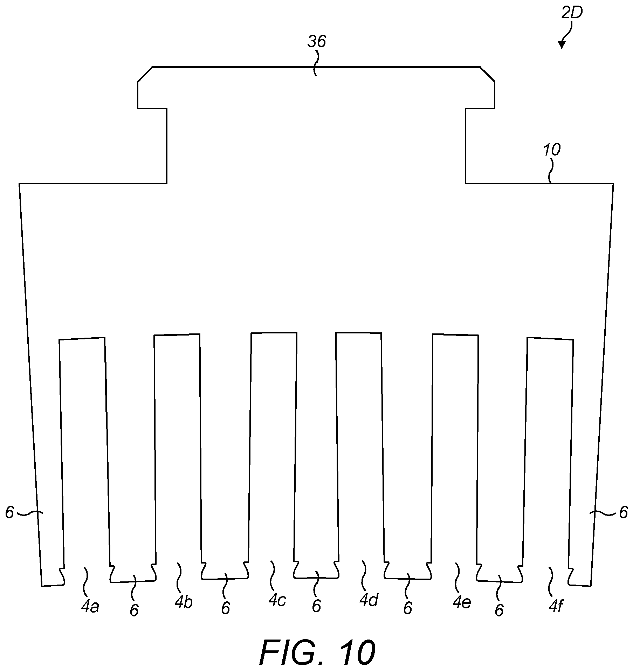

For the stator segments and reinforcement members described above, it will be readily understood that each protrusion and its corresponding recess can have any suitable profile, e.g., dovetail, T-shaped etc. designed to permit the stator segment to move axially relative to the reinforcement member during an assembly or removal process with the protrusion received in its corresponding recess, but to restrict movement of the stator segment in the radial direction. Figure 10 shows an alternative stator segment 2D. The stator segment 2D includes six spaced winding slots 4a, 4b, ..., 4f formed in a first arcuate surface. The winding slots 4a, 4b, ..., 4f extend along the longitudinal axis of the stator segment. Each winding slot 4a, 4b, ..., 4f is defined between a pair of stator teeth 6. A connecting element in the form of a protrusion 36 having a T-shaped profile is formed in a second arcuate surface 10 of the stator segment 2D and extends along the longitudinal axis of the stator segment. In all other respects, the stator segment 2D is the same as stator segments 2A, 2B and 2C described above.

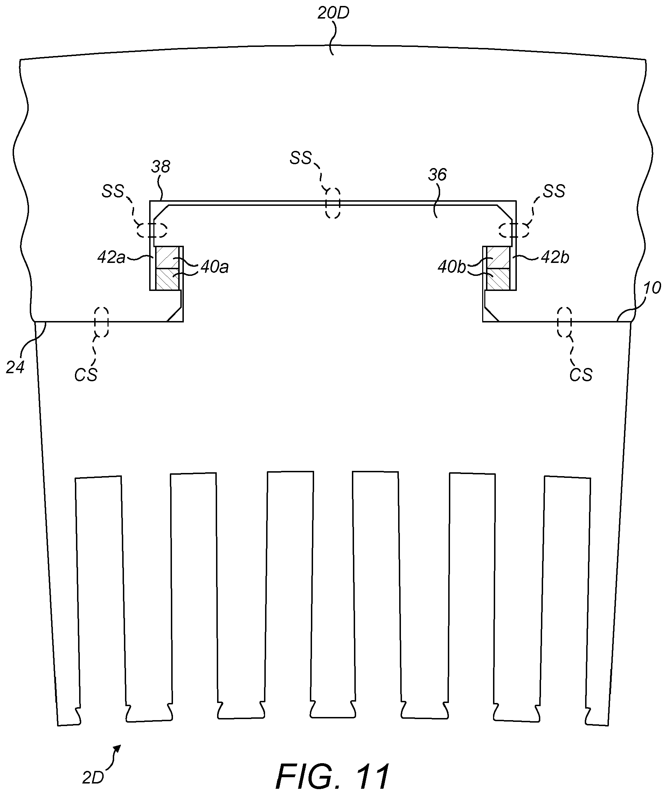

Figure 11 shows the stator segment 2D removably connected to a hollow tubular reinforcement member 20D. Only part of the reinforcement member 20D is shown. It will be readily understood that several more stator segments will be connected to the reinforcement member 20D to form the complete segmented stator.

The reinforcement member 20D includes a plurality of circumferentially-spaced and axially-extending recesses 38 in its substantially cylindrical radially inner surface 24. Each recess 38 has a complementary T-shaped profile and is adapted to receive the protrusion 36 of a stator segment 2D. In this way, the stator segments 2D are removably connected to the reinforcement member 20D, i.e., by receiving the protrusion 36 of each stator segment in a recess 38 and sliding the stator segment axially relative to the reinforcement member until it is properly positioned. Once properly positioned, each stator segment 2D is fixedly secured to the reinforcement member 20D until it needs to be removed. Each stator segment 2D is fixed to the reinforcement member 20D during normal operation of the electrical machine using wedges or similar mechanical fixings which are described in more detail below. A stator segment 2D can be removed from the segmented stator for repair or maintenance by releasing the wedge or mechanical fixing and then sliding the stator segment axially relative to the reinforcement member 20D until the protrusion 36 is no longer received in the recess 38.

Figure 11 shows how a gap or clearance is provided between the protrusion 36 and its corresponding shaped recess 38 to facilitate assembly and removal of the stator segment 2D to and from the reinforcement member 20D. The stator segment 2D and the reinforcement member 20D include contact surfaces, i.e., facing surfaces that are intended to be in direct physical contact when the stator segment is properly assembled to the reinforcement member. In Figure 11, the various contact surfaces are labelled as "CS". Peripheral portions of the second arcuate surface 10 of the stator segment 2D are in direct physical contact with peripheral portions of the facing inner surface 24 of the reinforcement member 20D. The stator segment 2D and the reinforcement member 20D also include one or more spaced surfaces, i.e., facing surfaces that are spaced apart when the stator segment is properly assembled to the reinforcement member. In Figure 11, the various spaced surfaces are labelled as "SS". A pair of back-to-back taper wedges 40a, 40b are shown inserted in the gap 42a, 42b between a pair of spaced surfaces. The taper wedges 40a, 40b are inserted between the spaced surfaces from an axial end of the segmented stator to fix securely the stator segment 2D to the reinforcement member 20D. The taper wedges 40a, 40b are capable of being removed or released to allow the stator segment 2D to be removed from the reinforcement member 20D if necessary.

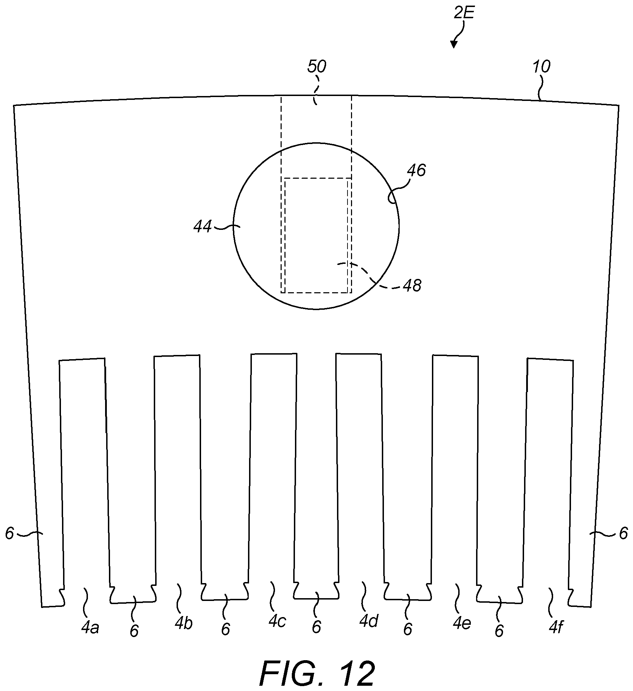

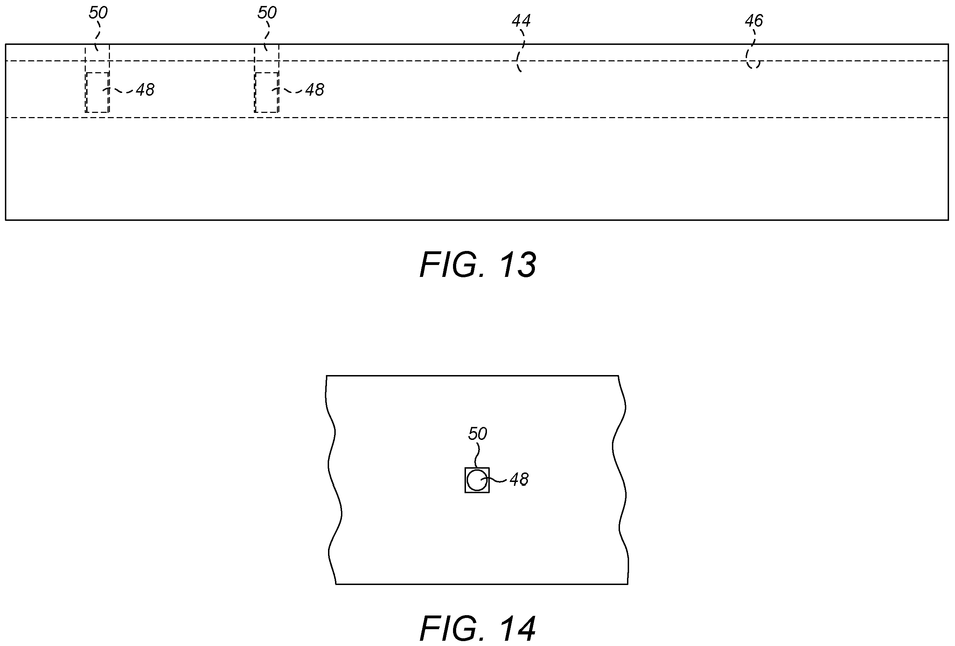

Figures 12 to 16 show an alternative stator segment 2E. The stator segment 2E includes six spaced winding slots 4a, 4b, ..., 4f formed in a first arcuate surface. The winding slots 4a, 4b, ..., 4f extend along the longitudinal axis of the stator segment. Each winding slot 4a, 4b, ..., 4f is defined between a pair of stator teeth 6. A connecting element in the form of a connecting bar 44 (or "build bar") extends through a longitudinally-extending passage 46 in a structural part of the stator segment 2E. The connecting bar 44 includes a plurality of threaded openings 48 longitudinally spaced along the connecting bar. Each threaded opening 48 in the connecting bar 44 is aligned with a corresponding opening 50 in the second arcuate surface 10 of the stator segment 2E and a corresponding opening 52 in the reinforcement member 20E (which opening can be threaded or non-threaded). In Figure 13, only two threaded openings 48 and corresponding openings 50 are shown for clarity, but it will be readily understood that any suitable number of openings can be provided. The openings are indicated generally by the dashed lines.

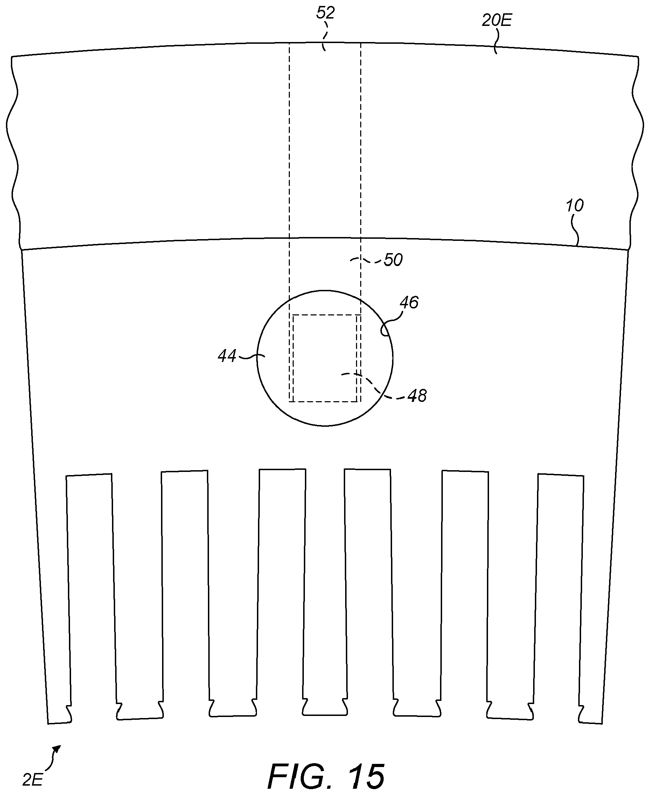

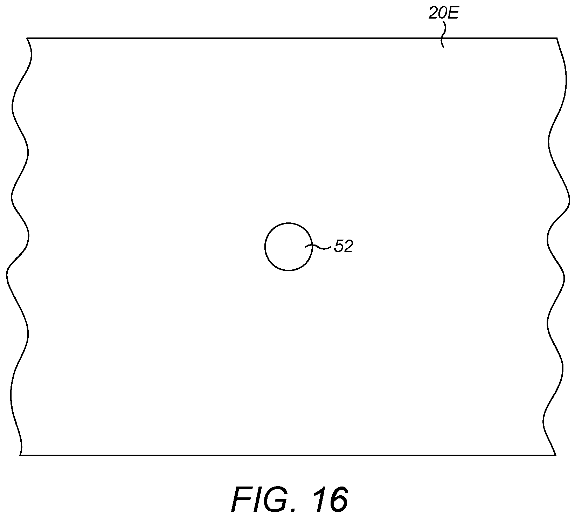

The reinforcement member 20E shown in Figures 15 and 16 is formed as a hollow tubular member and the openings 52 extend through the reinforcement member, i.e., from the radially outer surface to the radially inner surface. Although not shown, each stator segment can include two or more connecting bars, each connecting bar extending through a corresponding longitudinally-extending passage in the stator segment. In this case, the connecting bars would normally be spaced apart in the circumferential direction.

Although not shown, each stator segment 2E can also include one or more axially-extending passages, each passage being adapted to receive a tie rod. The stacked laminations of each stator segment 2E can be clamped between a pair of axial end plates. A plurality of tie rods can be connected between the axial end plates. The connecting bar 44 can be retained between the axial end plates, i.e., the end plates can prevent the connecting bar from being able to move in the axial direction. Instead of using tie rods, the ends of the connecting bar 44 can be welded to the end plates of the stator segment after the stacked laminations are compressed.

It will be readily understood that the stator segments 2A, 2B, ..., 2D described above can also include axial end plates, one or more tie rods etc.

The longitudinally-extending passage 46 in the stator segment 2E is defined by a respective opening in each lamination sheet so that the passage is formed when the lamination sheets are stacked together to form the stator segment. The connecting bar 44 and the corresponding passage 46 can have any suitable cross-section, e.g., circular, square etc., the cross-section of the passage being defined by the cross-section of the respective opening in each lamination sheet. The connecting bar 44 and passage 46 shown in Figures 12 to 16 have a circular cross-section. But a non-circular cross-section can help with the alignment between the openings 48 and 50 respectively provided in the connecting bar 44 and the structural part of the stator segment 2E.

The openings 50 in the second arcuate surface 10 of the stator segment 2E have a square cross-section as shown most clearly in Figure 14. The openings 50 can be defined by the outer profile of certain lamination sheets. More particularly, certain lamination sheets can have a notch in the edge that defines the second arcuate surface. The notch will extend to the opening in the lamination sheet that defines the longitudinally-extending passage 46 when the laminations are stacked together. A plurality of these lamination sheets can then be stacked between stacks of lamination sheets that do not include a notch to define an opening in the second arcuate surface 10 of the stator segment. Each opening 50 in the structural part of the stator segment 2E only needs to be sized and shaped to provide access to the respective threaded opening 48 in the connecting bar 44. In another arrangement, which is not shown, all of the lamination sheets can include a notch so that the second arcuate surface 10 of the stator segment 2E includes a longitudinally extending recess that provides access to the threaded openings 48 in the connecting bar 44.

A mechanical fixing, e.g., a bolt or screw, can be passed through each aligned opening in the reinforcement member and the stator segment (i.e., through openings 52 and 50) and screwed into the threaded opening 48 in the connecting bar 44. A plurality of mechanical fixings are therefore used to removably connect the stator segment 2E to the reinforcement member 20E.

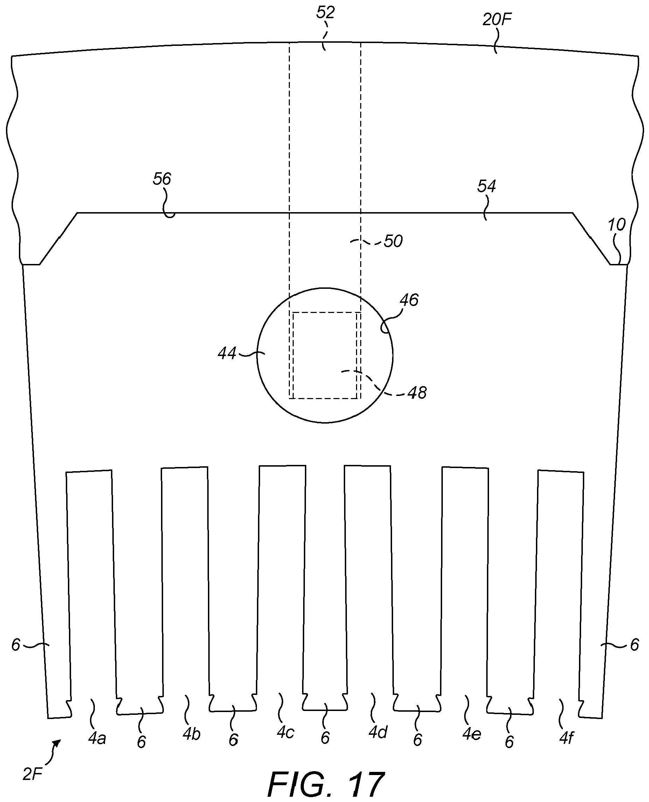

To facilitate the alignment between the openings in the reinforcement member and the corresponding openings in the stator segment, the alternative stator segment 2F shown in Figure 17 includes an alignment element or guide element. The alignment element is a shaped protrusion or profile 54 formed on the second arcuate surface 10 of the stator segment 2E and adapted to be received in a complementary shaped recess or profile 56 formed in the substantially cylindrical surface of the reinforcement member 20F. The alignment element is not intended to secure the stator segment 2F to the reinforcement member 20F, but is for guiding the stator segment and assisting with the proper positioning of the stator segment relative to the reinforcement member during the assembly and removal processes.

To assemble the segmented stator, the stator segment 2E or 2F is moved axially relative to the reinforcement member 20E or 20F, in the latter case while being guided by the alignment element. Once the stator segment 2E or 2F is properly assembled to the reinforcement member 20E or 20F, i.e., it is axially located with the openings 50 and 52 in alignment, the stator segment is fixed securely to the reinforcement member by inserting mechanical fixings (not shown) through the reinforcement member and into the threaded openings 48 in the connecting bar 44. The mechanical fixings are inserted from radially outside the reinforcement member 20E or 20F and the head of each mechanical fixing is tightened against the radially outer surface of the reinforcement member.

If there is a fault with one of the stator coils of the stator segment 2E or 2F, the stator segment can be released from the reinforcement member 20E or 20F, e.g., by untightening and removing the mechanical fixings, and then removed from the segmented stator by moving the stator segment axially relative to the reinforcement member.

The reinforcement members 20A, 20B, ..., 20F described above can be solid or have a laminated construction, i.e., they can be formed from a stack of thin lamination sheets that are stacked together in the axial direction to form the reinforcement member. The laminated construction significantly reduces eddy current losses in the reinforcement member.

The segmented stator can comprise any suitable number of stator segments 2A, 2B, ..., 2F. The number will depend on the total number of winding slots of the segmented stator and the number of winding slots formed in each stator segment.

Although not shown, it will also be readily understood that stator segments can be designed to form a segmented stator that is located radially inside a rotor of the electrical machine. In this case, the stator segments will be arranged circumferentially around a reinforcement member so that their respective first arcuate surfaces - in which the winding slots are formed - define a substantially cylindrical radially outer surface of the segmented stator, and their respective second arcuate surfaces - which might include at least one protrusion or recess - will form part of a radially inner surface of the segmented stator facing a radially outer surface of the reinforcement member. Stator segments that are designed to form a segmented stator that is located radially inside a rotor of the electrical machine can also include one or more connecting bars as described above, where the mechanical fixings are inserted from radially inside a hollow cylindrical reinforcement member and the head of each mechanical fixing is tightened against the radially inner surface of the reinforcement member.

## Claims

1. A stator segment (2A; 2B; 2C; 2D; 2E; 2F) adapted to be assembled with one or more other stator segments to a substantially cylindrical reinforcement member (20A; 20B; 20C; 20D; 20E; 20F) to form a segmented stator of an electrical machine, the stator segment (2A; 2B; 2C; 2D; 2E; 2F) comprising:
a plurality of spaced, longitudinally-extending winding slots (4a, 4b, ..., 4f) formed in a first surface of the stator segment (2A; 2B; 2C; 2D; 2E; 2F);
a plurality of pre-formed stator coils (14a, 14b, 14c), each stator coil received in a pair of the winding slots (4a, 4b, ..., 4f) and forming part of a single-layer stator winding of the electrical machine; and
at least one connecting element (8; 18; 36; 44) adapted to removably connect the stator segment (2A; 2B; 2C; 2D; 2E; 2F) to the substantially cylindrical reinforcement member (20A; 20B; 20C; 20D; 20E; 20F).

2. A stator segment (2A; 2B; 2C; 2D; 2E; 2F) according to claim 1, having a laminated construction.

3. A stator segment (2A; 2B; 2C; 2D; 2E; 2F) according to claim 1 or claim 2, further comprising a second surface (10), opposite the first surface.

4. A stator segment (2C; 2D) according to claim 3, wherein each connecting element comprises a shaped protrusion (18; 36) formed on the second surface (10) of the stator segment (2C; 2D) and adapted to be received in a complementary shaped recess (26; 38) formed in a substantially cylindrical surface (24) of the reinforcement member (20B; 20C; 20D).

5. A stator segment (2C; 2D) according to claim 4, wherein the shaped protrusion is one of a dovetail protrusion (18) and a T-shaped protrusion (36).

6. A stator segment (2A; 2B) according to claim 3, wherein each connecting element comprises a shaped recess (8; 8a, 8b, 8c) formed in the second surface (10) of the stator segment (2A; 2B) and adapted to receive a complementary shaped protrusion (22) formed on a substantially cylindrical surface of the reinforcement member (20A).

7. A stator segment (2A; 2B) according to claim 6, wherein the shaped recess is one of a dovetail recess (8; 8a, 8b, 8c) and a T-shaped recess.

8. A stator segment (2E; 2F) according to claim 3, wherein each connecting element comprises a connecting bar (44) that extends through a longitudinally-extending passage (46) in the stator segment (2E, 2F), wherein the connecting bar (44) comprises one or more threaded openings (48) longitudinally spaced along the connecting bar (44), and wherein each threaded opening (48) in the connecting bar (44) is aligned with a corresponding opening (50) in the second surface (10) of the stator segment (2E, 2F).

9. A stator segment (2F) according to claim 8, further comprising at least one alignment element (54).

10. A segmented stator of an electrical machine comprising:
a substantially cylindrical reinforcement member (20A; 20B; 20C; 20D; 20E; 20F); and
a plurality of stator segments (2A, 2B; 2C; 2D; 2E; 2F), each stator segment comprising:
a plurality of spaced, longitudinally-extending winding slots (4a, 4b, ...,
4f) formed in a first surface of the stator segment;
a plurality of pre-formed stator coils (14a, 14b, 14c), each stator coil received in a pair of the winding slots (4a, 4b, ..., 4f); and
at least one connecting element (8; 18; 36; 44);
wherein each stator segment (2A; 2B; 2C; 2D; 2E; 2F) is removably connected to the reinforcement member (20A; 20B; 20C; 20D; 20E; 20F) by the at least one connecting element (8; 18; 36; 44); and
wherein the stator coils (14a, 14b, 14c) of the plurality of stator segments are electrically connected to form a single-layer stator winding of the electrical machine.

11. A segmented stator according to claim 10, wherein the reinforcement member (20A; 20B; 20C; 20D; 20E; 20F) has a laminated construction.

12. A segmented stator according to claim 10 or claim 11, wherein the reinforcement member (20A; 20B; 20C; 20D; 20E; 20F) is a hollow tubular member.

13. A method of assembling a segmented stator of an electrical machine, comprising:
providing a plurality of stator segments (2A; 2B; 2C; 2D; 2E; 2F), each stator segment comprising:
a plurality of spaced, longitudinally-extending winding slots (4a, 4b, ...,
4f) formed in a first surface of the stator segment;
a plurality of pre-formed stator coils (14a, 14b, 14c), each stator coil received in a pair of the winding slots (4a, 4b, ..., 4f); and
at least one connecting element (8; 18; 36; 44);
providing a substantially cylindrical reinforcement member (20A; 20B; 20C; 20D; 20E; 20F);
moving each stator segment (2A; 2B; 2C; 2D; 2E; 2F) axially relative to the reinforcement member (20A; 20B; 20C; 20D; 20E; 20F) and removably connecting each stator segment (2A; 2B; 2C; 2D; 2E; 2F) to the reinforcement member (20A; 20B; 20C; 20D; 20E; 20F) using the at least one connecting element (8; 18; 36; 44).

14. A method according to claim 13, further comprising electrically connecting the stator coils (14a, 14b, 14c) of the plurality of stator segments (2A; 2B; 2C; 2D; 2E; 2F) to form a single-layer stator winding of the electrical machine.

15. A method of repairing or servicing a segmented stator of an electrical machine, the segmented stator comprising:
a substantially cylindrical reinforcement member (20A; 20B; 20C; 20D; 20E; 20F); and
a plurality of stator segments (2A; 2B; 2C; 2D; 2E; 2F), each stator segment comprising:
a plurality of spaced, longitudinally-extending winding slots (4a, 4b, ...,
4f) formed in a first surface of the stator segment;
a plurality of pre-formed stator coils (14a, 14b, 14c), each stator coil received in a pair of the winding slots (4a, 4b, ..., 4f); and
at least one connecting element (8; 18; 36; 44);
wherein each stator segment (2A; 2B; 2C; 2D; 2E; 2F) is removably connected to the reinforcement member (20A; 20B; 20C; 20D; 20E; 20F) by the at least one connecting element (8; 18; 36; 44);
the method comprising:
removing a stator segment (2A; 2B; 2C; 2D; 2E; 2F) by moving the stator segment (2A; 2B; 2C; 2D; 2E; 2F) axially relative to the reinforcement member (20A; 20B; 20C; 20D; 20E; 20F).
